# EUROPEAN PATENT SPECIFICATION

(11) **EP 2 292 556 B1**
(45) Date of publication and mention of the grant of the patent: **10.07.2013**
(21) Application number: 09758184.7
(22) Date of filing: 28.04.2009
(51) Int. Cl.: C01B 11/24, C01B 7/24

(54) **METHOD FOR MANUFACTURING OXYGEN-CONTAINING HALOGENATED FLUORIDE**
VERFAHREN ZUR HERSTELLUNG VON SAUERSTOFFHALTIGEM HALOGENIERTEM FLUORID
PROCÉDÉ DE FABRICATION D'UN FLUORURE HALOGÉNÉ RENFERMANT DE L'OXYGÈNE

(30) Priority: 02.06.2008 JP 2008144616
(43) Date of publication of application: 09.03.2011
(73) Proprietor: Central Glass Company, Limited, Yamaguchi 755-0001 (JP)
(72) Inventor: KIKUCHI, Akiou, Yamaguchi 755-0001 (JP); MORI, Isamu, Yamaguchi 755-0001 (JP)
(74) Representative: Manitz, Gerhart
(86) International application number: PCT/JP2009/058357
(87) International publication number: WO 2009/147917

(56) References cited:
- FR-A- 1 497 123
- GB-A- 1 182 535
- US-A- 3 545 924
- US-A- 3 545 924
- US-A- 3 718 557
- US-A- 3 733 392

## Description

### Technical Field

The present invention relates to a method for manufacturing an oxygen-containing halogenated fluoride.

### Background Art

An oxygen-containing halogenated fluoride is utilized as a monofluoromethylation agent for production of 1-fluoro-1,1-bis(arylsulfonyl)methane, which is a physiologically active substance useful as a pharmaceutical product (cf. Patent Document 1).

As methods for manufacturing the oxygen-containing halogenated fluoride, it is conventionally known to produce ClO₂F by, for example, reaction of Cl₂O and ClF (Non-Patent Document 1) and reaction of CIF₅ and CsNO₃ (Non-Patent Document 2).

These manufacturing methods of the oxygen-containing halogenated fluoride each generally involve a solid-gas reaction or a reaction using an explosive compound. As F₂ gas or fluoride gas used in the solid-gas reaction is a very active substance, the temperature increases with the progress of the reaction. The development of such temperature increase can result in the occurrence of an explosive reaction or decomposition of the solid raw material. It is thus necessary in the above conventional manufacturing methods to prevent temperature increases, which makes it difficult to produce the target oxygen-containing halogenated fluoride efficiently and continuously.

Patent document 2 discloses a method for manufacturing chloryl fluoride (i.e. ClO₂F), comprising the reaction of chlorine monoxide, Cl₂O, with silver difluoride, AgF₂.

Patent document 3 describes a method for manufacturing chloryl fluoride (i.e. ClO₂F), comprising the reaction of oxygen with chlorine monofluoride (i.e. CIF).

Patent document 4 refers to a method for manufacturing chloryl fluoride (i.e. ClO₂F), comprising the reaction of oxygen with chlorine monofluoride (i.e. CIF).

### Prior Art Documents

### Patent Documents

Patent Document 1: Japanese Laid-Open Patent Publication No. 2007-230961
Patent document 2: GB 1 182 535 A (COMMISSARIAT ENERGIE ATOMIQUE [FR]) 25 February 1970 (1970-02-25)
Patent document 3: FR 1 497 123 A (OLIN MATHIESON) 6 October 1967 (1967-10-06)
Patent document 4: US 3 545 924 A (FAUST JOHN P ET AL) 8 December 1970 (1970-12-08)

### Non-Patent Document

Non-Patent Document 1: Journal of the Chemical Society (1954), 4113-4116
Non-Patent Document 2: Inorganic Chemistry (1989), 28, 675

### Disclosure of the Invention

The present invention has been made in order to solve the above problems. It is therefore an object of the present invention to provide a method for producing an oxygen-containing halogenated fluoride efficiently and continuously.

As a result of extensive researches, the present inventors have found that a gas-liquid reaction process can suitably be used for production of an oxygen-containing halogenated fluoride. The present invention is based on this finding.

Namely, there is provided according to the present invention a method for manufacturing an oxygen-containing halogenated fluoride of the general formula: XO₂F, the method comprising reacting a halogen fluoride of the general formula: XF with a H₂O source, where X represents a halogen element selected from Cl, Br and I in the general formulas.

### Brief Description of the Drawing

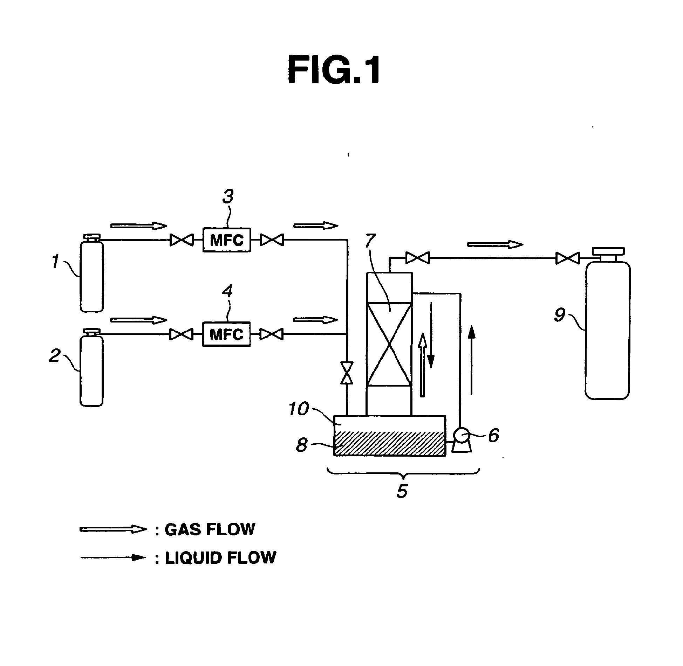

FIG 1 is a schematic view of an apparatus for producing an oxygen-containing halogenated fluoride according to the present invention.

### Detailed Description

Hereinafter, the present invention will be described in detail.

In the present invention, an oxygen-containing halogenated fluoride of the general formula: XO₂F is produced by reaction of a halogen fluoride of the general formula: XF with an H₂O source. Herein, X represents a halogen element selected from Cl, Br and I in the general formulas.

Examples of the halogen fluoride XF used as raw material gas are ClF₃, IF₃, IF₇, IF₅, ClF, BrF, BrF₃ and BrF₅.

Examples of the H₂O source used as raw material liquid are water and aqueous solutions with a pH of 1 to 13, such as an aqueous HF solution, an aqueous KF solution, an aqueous KOH solution, an aqueous NaOH solution, an aqueous K₂CO₃ solution, an aqueous NaF solution and an aqueous Al(OH)₂ suspended solution. There is no particular limitation on the temperature of use of the raw material liquid.

Specific examples of the oxygen-containing halogenated fluride XO₂F produced by the gas-liquid reaction of the halogen fluoride XF and the H₂O source according to the present invention are ClO₂F, BrO₂F and IO₂F.

Either a counter-flow contact technique or a parallel-flow contact technique can be adopted for the gas-liquid contact reaction of the raw material gas and the raw material liquid. Among others, the counter-flow contact is more preferred in view of the gas-contact contact efficiency. Further, there is no concern about the reaction temperature of the gas-liquid reaction of the raw material gas and the raw material liquid as long as the reaction temperature is that at which the raw material liquid can be brought in the form of a liquid into contact with the raw material gas.

There is no particular limitation on the production apparatus of the oxygen-containing halogenated fluoride XO₂F according to the present invention as long as the production apparatus is equipped with a reactor for the contact reaction of the raw material gas and the raw material liquid and is so structured as to supply the raw material gas and the raw material liquid into the reactor and discharge the resulting gas from the reactor. The reactor may also include a mechanism for recirculation of the raw material liquid. There is also no particular limitation on the material of the reactor as long as the reactor material is sufficiently resistant to the raw material gas and the raw material liquid. Preferred examples of the reactor material are stainless steel, Ni steel, iron steel, Monel, Inconel and aluminium.

FIG. 1 is a schematic diagram showing one embodiment of the production apparatus according to the present invention. In this embodiment, the production apparatus includes a diluent gas cylinder 1, a raw material gas cylinder 2, mass flow controllers (MFCs) 3 and 4, a reactor 5 and an empty container 9.

The diluent gas cylinder 1 and the raw material gas cylinder 2 store therein diluent gas (e.g. N₂) and raw material gas (e.g. ClF₃), respectively. The flow rates of the diluent gas and the raw material gas are controlled by the MFCs 3 and 4 so as to mix these gases to a predetermined gas composition and introduce the mixed gas into the reactor 5.

The reactor 5 has a packed tower 7 in which a filler is packed, a liquid chamber 10 provided with a sufficient capacity for storing therein the raw material liquid 8 and having an inner wall lined with polytetrafluoroethylene, and a liquid transfer pump 6 for transferring the raw material liquid 8 from the liquid chamber 10 to the top of the filler. The raw material gas is introduced into the packed tower 7 from the bottom and brought into counter contact with the raw material liquid 8 within the packed tower 7. The resulting gas is discharged from the top of the reactor 5.

The gas discharged from the reactor 5 is collected into the empty container 9. The gas collected in the container 9 is analyzed by a Fourier transform infrared spectrometer (FT-IR) etc. to determine the concentration of the produced oxygen-containing halogenated fluoride XO₂F (e.g. ClO₂F) in the gas.

As described above, the present invention adopts the gas-liquid reaction of the halogen fluoride and the H₂O source so that it is easier to control the temperature of the reaction than that of the conventional solid-gas reaction or reaction using explosive compound and is thus possible to produce the target oxygen-containing halogenated fluoride XO₂F efficiently and continuously.

The oxygen-containing halogenated fluoride XO₂F obtained according to the present invention can be utilized as a selective fluorination agent for fluorination at the α-position of an ester.

The present invention will be described in more detail below by way of the following examples. It should be noted that these examples are illustrative and are not intended to limit the present invention thereto.

### Example 1

Using the above-mentioned production apparatus, the gas-liquid reaction of the halogen fluoride XF and H₂O source was carried out. In the reactor 5, a tube of SUS316 having a length of 650 mm, an inner diameter of 25 mm and an inner wall lining of polytetrafluoroethylene with a thickness of 0.1 mm was used as the packed tower 7; and 4φ PTFE (polytetrafluoroethylene) Raschig ring was packed as the filler in the packed tower 7. Further, F₂ gas and ClF₃ gas were used as the diluent gas and the raw material gas (halogen fluoride XF), respectively. The flow rates of these gases were controlled by the MFCs 3 and 4 in such a manner as to provide a mixed gas with a gas composition of ClF₃ : N₂ = 2vol% : 98vol%. As the raw material liquid 8 (H₂O source), an aqueous solution of 4.0 mass% hydrogen fluoride (pH =1) was used. The above-prepared mixed gas was introduced into the reactor 5 at a flow rate of 0.274 l/min (superficial linear velocity of 9.31 x 10⁻³ m/sec) and at a reaction temperature of 24°C. After that, the gas discharged from the reactor 5 was collected into the empty container 9.

The concentration of ClO₂F in the gas collected in the empty container 9 was analyzed by a FT-IR ("IG-1000" available from Otsuka Electronics Co., Ltd.). As a result, the ClO₂F concentration was 3872 ppm. The generation of ClO₂F was thus confirmed. The product yield on Cl basis was 19.36%.

### Example 2

The gas-liquid reaction was carried out under the same conditions as in Example 1, except that the gas composition of the mixed gas was controlled to ClF₃ : N₂ = 4.4vol% : 95.6vol% by the MFCs 3 and 4. The concentration of ClO₂F in the gas collected after discharged from the reactor 5 was analyzed by a FT-IR ("IG-1000" available from Otsuka Electronics Co., Ltd.) in the same manner as in Example 1.

As a result, the ClO₂F concentration was 10864 ppm; and the generation of ClO₂F was confirmed. The product yield on Cl basis was 24.69%.

### Example 3

The gas-liquid reaction was carried out under the same conditions as in Example 1, except that the gas composition of the mixed gas was controlled to ClF₃ : N₂ = 6.2vol% : 93.8vol% by the MFCs 3 and 4. The concentration of ClO₂F in the gas collected after discharged from the reactor 5 was analyzed by a FT-IR ("IG-1000" available from Otsuka Electronics Co., Ltd.) in the same manner as in Example 1.

As a result, the ClO₂F concentration was 19562 ppm; and the generation of ClO₂F was confirmed. The product yield on Cl basis was 31.55%.

### Example 4

The gas-liquid reaction was carried out under the same conditions as in Example 1, except that the gas composition of the mixed gas was controlled to ClF₃ : N₂ = 24.8vol% : 75.2vol% by the MFCs 3 and 4. The concentration of ClO₂F in the gas collected after discharged from the reactor 5 was analyzed by a FT-IR ("IG-1000" available from Otsuka Electronics Co., Ltd.) in the same manner as in Example 1.

As a result, the ClO₂F concentration was 70672 ppm; and the generation of ClO₂F was confirmed. The product yield on Cl basis was 28.50%.

### Example 5

The gas-liquid reaction was carried out under the same conditions as in Example 1, except that: the gas composition of the mixed was controlled to ClF₃ : N₂ = 2vol% : 98vol% by the MFCs 3 and 4; and the mixed gas was introduced into the reactor 5 at a flow rate of 1.096 l/min (superficial linear velocity of 3.72x 10⁻² m/sec). The concentration of ClO₂F in the gas collected after discharged from the reactor 5 was analyzed by a FT-IR ("IG-1000" available from Otsuka Electronics Co., Ltd.) in the same manner as in Example 1.

As a result, the ClO₂F concentration was 3569 ppm; and the generation of ClO₂F was confirmed. The product yield on Cl basis was 17.85%.

### Example 6

The gas-liquid reaction was carried out under the same conditions as in Example 1, except that: the gas composition of the mixed gas was controlled to ClF₃ : N₂ = 10vol% : 90vol% by the MFCs 3 and 4; and the mixed gas was introduced into the reactor 5 at a flow rate of 1.096 l/min (superficial linear velocity of 3.72 × 10⁻² m/sec). The concentration of ClO₂F in the gas collected after discharged from the reactor 5 was analyzed by a FT-IR ("IG-1000" available from Otsuka Electronics Co., Ltd.) in the same manner as in Example 1.

As a result, the ClO₂F concentration was 8901 ppm; and the generation of ClO₂F was confirmed. The product yield on Cl basis was 8.90%.

### Example 7

The gas-liquid reaction was carried out under the same conditions as in Example 1, except that: the gas composition of the mixed gas was controlled to ClF₃ : N₂ = 6.9vol% : 93.1 vol% by the MFCs 3 and 4; and the mixed gas was introduced into the reactor 5 at a flow rate of 1.096 l/min (superficial linear velocity of 3.72 × 10⁻² m/sec).
The concentration of ClO₂F in the gas collected after discharged from the reactor 5 was analyzed by a FT-IR ("IG-1000" available from Otsuka Electronics Co., Ltd.) in the same manner as in Example 1.

As a result, the ClO₂F concentration was 8434 ppm; and the generation of ClO₂F was confirmed. The product yield on Cl basis was 12.22%.

### Example 8

The gas-liquid reaction was carried out under the same conditions as in Example 1, except that: an aqueous suspended solution of 5 mass% aluminum hydroxide (pH = 7) was used as the raw material liquid 8; the gas composition of the mixed gas was controlled to ClF₃ : N₂ = 4.3vol% : 95.7vol% by the MFCs 3 and 4; and the reaction temperature was set to 40°C. The concentration of ClO₂F in the gas collected after discharged from the reactor 5 was analyzed by a FT-IR ("IG-1000" available from Otsuka Electronics Co., Ltd.) in the same manner as in Example 1.

As a result, the ClO₂F concentration was 3076 ppm; and the generation of ClO₂F was confirmed. The product yield on Cl basis was 7.15%.

### Example 9

The gas-liquid reaction was carried out under the same conditions as in Example 1, except that: water (pH = 7) was used as the raw material liquid 8; and the gas composition of the mixed gas was controlled to ClF₃ : N₂ = 2.7vol% : 97.3vol% by the MFCs 3 and 4. The concentration of ClO₂F in the gas collected after discharged from the reactor 5 was analyzed by a FT-IR ("IG-1000" available from Otsuka Electronics Co., Ltd.) in the same manner as in Example 1.

As a result, the ClO₂F concentration was 14879 ppm; and the generation of ClO₂F was confirmed. The product yield on Cl basis was 55.11%.

### Example 10

The gas-liquid reaction was carried out under the same conditions as in Example 9, except that the gas composition of the mixed gas was controlled to ClF₃ : N₂ = 5.6vol% : 94.4vol% by the MFCs 3 and 4. The concentration of ClO₂F in the gas collected after discharged from the reactor 5 was analyzed by a FT-IR ("IG-1000" available from Otsuka Electronics Co., Ltd.) in the same manner as in Example 9.

As a result, the ClO₂F concentration was 22765 ppm; and the generation of ClO₂F was confirmed. The product yield on Cl basis was 40.65%.

### Example 11

The gas-liquid reaction was carried out under the same conditions as in Example 1, except that: an aqueous solution of 40 mass% potassium hydroxide (pH = 13) was used as the raw material liquid 8; and the gas composition of the mixed gas was controlled to ClF₃ : N₂ = 2.7vol% : 97.3vol% by the MFCs 3 and 4. The concentration of ClO₂F in the gas collected after discharged from the reactor 5 was analyzed by a FT-IR ("IG-1000" available from Otsuka Electronics Co., Ltd.) in the same manner as in Example 1.

As a result, the ClO₂F concentration was 9831 ppm; and the generation of ClO₂F was confirmed. The product yield on Cl basis was 36.41%.

### Example 12

The gas-liquid reaction was carried out under the same conditions as in Example 1, except that: an aqueous solution of 10 mass% potassium carbonate (pH = 10) was used as the raw material liquid 8; and the gas composition of the mixed gas was controlled to CIF₃ : N₂ = 2.7vol% : 97.3vol% by the MFCs 3 and 4. The concentration of ClO₂F in the gas collected after discharged from the reactor 5 was analyzed by a FT-IR ("IG-1000" available from Otsuka Electronics Co., Ltd.) in the same manner as in Example 1.

As a result, the ClO₂F concentration was 9856 ppm; and the generation of ClO₂F was confirmed. The product yield on Cl basis was 36.50%.

### Comparative Example 1

The gas-liquid reaction was carried out under the same conditions as in Example 9, except that: the gas composition of the mixed gas was controlled to ClF₃ : N₂ = 0vol% : 100vol% by the MFCs 3 and 4; and the mixed gas was introduced into the reactor 5 at a flow rate of 0.274 l/min. The concentration of ClO₂F in the gas collected after discharged from the reactor 5 was analyzed by a FT-IR ("IG-1000" available from Otsuka Electronics Co., Ltd.) in the same manner as in Example 9.

As a result, the generation of ClO₂F was not confirmed.

### Comparative Example 2

The gas-liquid reaction was carried out under the same conditions as in Comparative Example 1, except that an aqueous solution of 4.0 mass% hydrogen fluoride (pH =1) was used as the raw material liquid 8. The concentration of ClO₂F in the gas collected after discharged from the reactor 5 was analyzed by a FT-IR ("IG-1000" available from Otsuka Electronics Co., Ltd.) in the same manner as in Comparative Example 1.

As a result, the generation of ClO₂F was not confirmed.

The above measurements results are indicated in TABLE 1.

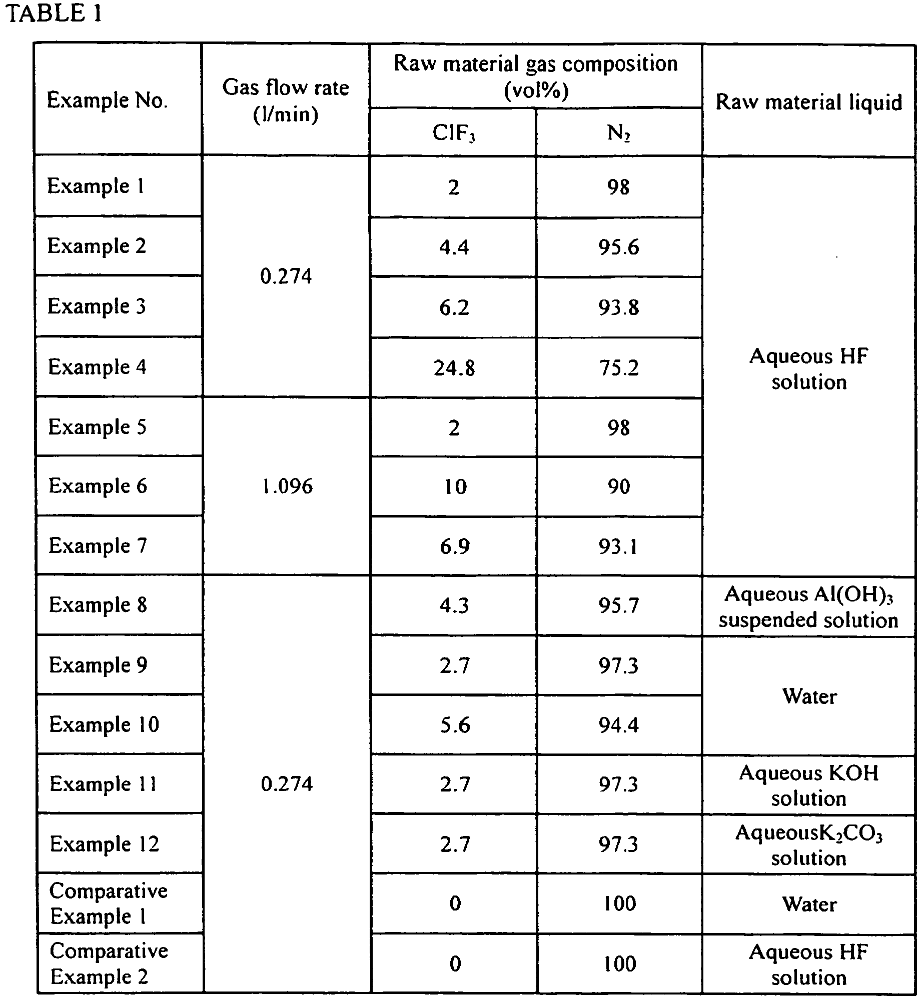

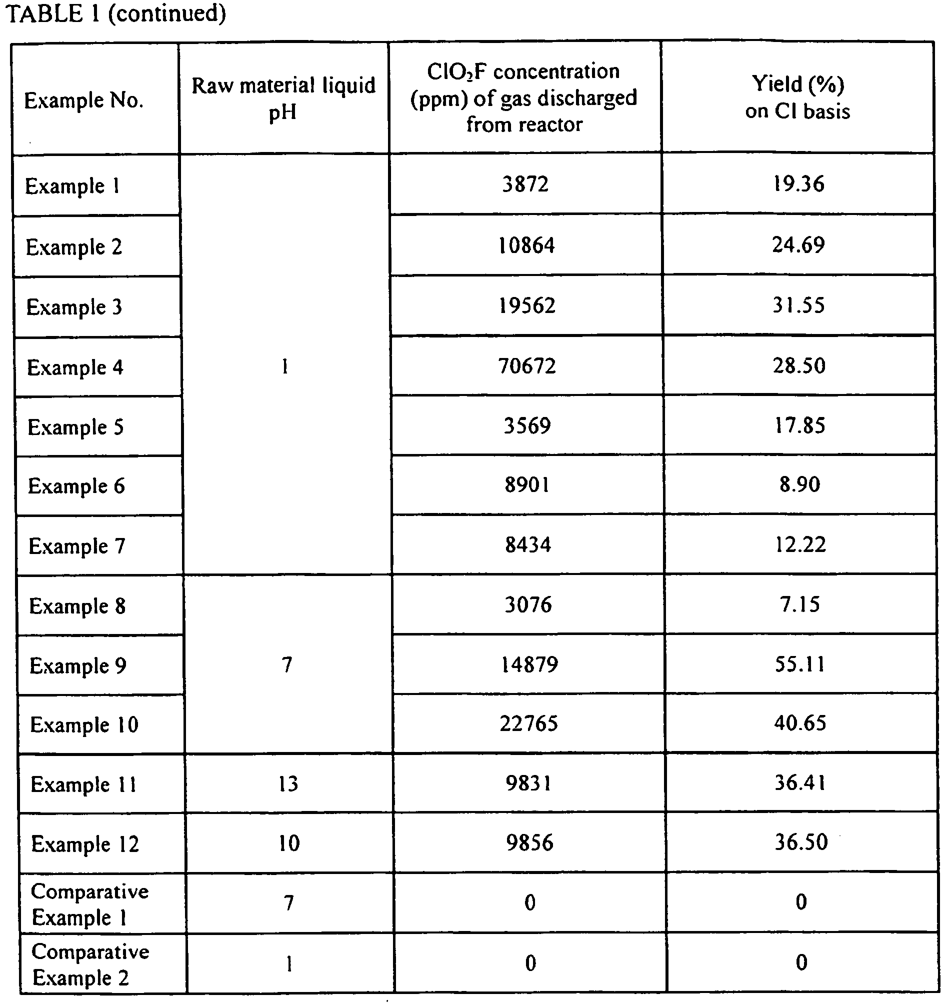

As seen in TABLE 1, the ClO₂F was produced with favorable yield by the gas-liquid reaction of the ClF₃ and the H₂O source (water or aqueous solution) in Examples 1 to 12. The temperature control was easier in the gas-liquid reaction than in the conventional solid-gas reaction or reaction using explosive compound.

It has thus been shown that it is possible to produce the target oxygen-containing halogenated fluoride XO₂F efficiently and continuously by the gas-liquid reaction of the halogen fluoride and the H₂O source.

Although the present invention has been described with reference to the above specific embodiments, the invention is not limited to these exemplary embodiments. Various modifications and variations of the embodiments described above will occur to those skilled in the art without departing from the scope of the present invention.

## Claims

1. A manufacturing method of an oxygen-containing halogenated fluoride of the general formula: XO₂F, comprising: reacting a halogen fluoride of the general formula: XF with a H₂O source, where X represents a halogen element selected from Cl, Br and I in the general formulas.

2. The manufacturing method according to claim 1, wherein the halogen fluoride is either one of ClF, ClF₃, IF₃, IF₇, IF₅, BrF, BrF₃ and BrF₅; and wherein the H₂O source is either water or an aqueous solution with a pH of 1 to 13.

## Patentansprüche

1. Herstellungsverfahren für ein Sauerstoff enthaltendes halogeniertes Fluorid gemäß der allgemeinen Formel XO₂F umfassend Reagieren eines Halogenfluorids gemäß der allgemeinen Formel XF mit einer H₂O-Quelle, worin in den allgemeinen Formeln X ein Halogenelement ausgewählt aus Cl, Br und I bedeutet.

2. Herstellungsverfahren nach Anspruch 1, wobei das Halogenfluorid eines von ClF, ClF₃, IF₃, IF₇, IF₅, BrF, BrF₃ sowie BrF₅ ist, und, wobei die H₂O-Quelle entweder Wasser oder eine wässrige Lösung mit einem pH-Wert von 1 bis 13 ist.

## Revendications

1. Procédé de fabrication d'un fluorure halogéné contenant de l'oxygène présentant la formule générale : XO₂F, comprenant l'opération consistant à faire réagir un fluorure d'halogène présentant la formule générale XF avec une source de H₂O, où X représente un élément halogène choisi parmi Cl, Br et I dans les formules générales.

2. Procédé de fabrication selon la revendication 1, dans lequel le fluorure d'halogène est un fluorure parmi ClF, ClF₃, IF₃, IF₇, IF₅, BrF, BrR₃ et BrF₅ ; et dans lequel la source de H₂O est soit de l'eau soit une solution aqueuse avec un pH de 1 à 13.
